# EUROPÄISCHE PATENTSCHRIFT

(11) **EP 2 406 324 B1**
(45) Veröffentlichungstag und Bekanntmachung des Hinweises auf die Patenterteilung: **13.08.2014**
(21) Anmeldenummer: 10709201.7
(22) Anmeldetag: 11.03.2010
(51) Int. Cl.: C08L 33/02, C09J 11/08, C09J 9/00, C08L 33/06

(54) **KLEBESTIFT MIT SUPERABSORBERN**
GLUE STICK CONTAINING SUPERABSORBERS
BÂTON DE COLLE À SUPER-ABSORBEUR

(30) Priorität: 13.03.2009 DE 102009012667
(43) Veröffentlichungstag der Anmeldung: 18.01.2012
(73) Patentinhaber: Henkel AG & Co. KGaA, 40589 Düsseldorf (DE)
(72) Erfinder: PICKER, Stefan, 41541 Dormagen (DE); HRZIBEK, Martin, 42781 Haan (DE); SCHRIEFERS, Mathias, 41239 Mönchengladbach (DE); RÖNISCH, Ralf, 42349 Wuppertal (DE)
(86) Internationale Anmeldenummer: PCT/EP2010/053119
(87) Internationale Veröffentlichungsnummer: WO 2010/103074

(56) Entgegenhaltungen:
- WO-A1-99/51699
- WO-A1-99/57201
- DE-A1- 4 021 231
- TOAGOSEI CO., LTD.: "Acrylic polymers - Functional polymer products" 2008, XP002584914 Gefunden im Internet: URL:http://www.toagosei.co.jp/english/busi ness/acryl/index.html?main/english/busines s/acryl/products/acryl2_04.html> [gefunden am 2010-05-31]
- BOWEN P: "Particle Size Distribution Measurement from Millimeters to Nanometers and from Rods to Platelets", JOURNAL OF DISPERSION SCIENCE AND TECHNOLOGY, TAYLOR AND FRANCIS GROUP, NEW YORK, NY, US, vol. 23, no. 5, 1 January 2002 (2002-01-01), pages 631-662, XP009102859, ISSN: 0193-2691, DOI: 10.1081/DIS-120015368

## Beschreibung

Die Erfindung betrifft einen Superabsorber enthaltenden Klebestift, seine Herstellung und Verwendung sowie die Verwendung von Superabsorbern in Klebestiften.

Klebestifte (= stäbchenförmige Klebstoffe, die in einer verschließbaren Hülle verschiebbar gelagert sind und beim Abreiben auf einer Substratoberfläche einen klebrigen Film hinterlassen) sind heute Gebrauchsgegenstände des täglichen Lebens. Sie enthalten beispielsweise wasserlösliche bzw. wasserdispergierbare synthetische Polymere mit Klebstoffcharakter - insbesondere Polyvinylpyrrolidon (PVP) - gelöst in einer wässrig-organischen Flüssigphase zusammen mit einer Form gebenden Gerüstsubstanz. Als Gerüstsubstanz werden insbesondere Alkali- bzw. Ammoniumsalze aliphatischer Carbonsäuren, insbesondere des C-Zahlbereichs von 12 bis 22, verwendet. Werden die an sich hochklebrigen wässrigen Zubereitungen der Polymersubstanzen mit Klebstoffcharakter zusammen mit geringen Mengen der Gerüstsubstanz auf Basis von Fettsäureseifen auf höhere Temperaturen, insbesondere oberhalb 50°C, erwärmt und lässt man diese Lösung in Ruhestellung abkühlen, so erstarrt das Stoffgemisch zu einem mehr oder weniger steifen Seifengel, in dem die Form gebende und vergleichsweise starre Micellstruktur solcher Seifengele zunächst überwiegend in Erscheinung tritt. Das ermöglicht die bekannte Ausbildung und Handhabung solcher Massen in Stiftform in verschließbaren Hülsen. Beim Abreiben wird die Micellstruktur zerstört und damit die starre Masse in den pastösen Zustand umgewandelt, in dem dann der Klebstoffcharakter des Stoffgemisches in den Vordergrund tritt.

In der WO 99/51699 sind Klebestifte beschrieben, die eine wässrige Zubereitung von Stärkeethern und Saccharose als klebende Komponente und ein Seifengel als Form gebende Gerüstsubstanz sowie weitere Hilfsstoffe enthalten. Wichtige, für den Verbraucher erfahrbare Gebrauchseigenschaften wie Festigkeit und Abrieb dieser Klebestifte sind jedoch nicht vollständig befriedigend und daher verbesserungswürdig.

Die DE 4021231 beschreibt Klebemassen, in denen als Bindemittel Acrylharze mit einer Glasübergangstemperatur von höchstens -10°C enthalten sind. Weitere Bestandteile sind wasserlösliche Acrylharze, Fettsäureseife, Alkalimetallhydroxid, Mikrokügelchen und Wasser. Die Anwendung dieser Klebesysteme beschränkt sich auf Pasten oder Klebemassen zur zeitweisen und wiederholten Befestigung von Papier oder Kunststoff-Folien an Oberflächen.

Darüber hinaus wird in der DE 102 34 028 die Verwendung von Superabsorbern in wasserlöslichen Heißschmelzklebstoffen, die als klebende Komponente Polyvinylalkohole und/oder PVAL-Copolymere enthalten, beschrieben.

Die bekannten Klebestifte enthalten in der Regel wässrige Zubereitungen von Polymersubstanzen als klebende Komponente. Wasser wirkt dabei grundsätzlich stabilisierend auf die Klebesysteme.

Andererseits verursacht der Wasseranteil auch nachteilige Effekte. So kann es beim Verkleben von Papier zu unerwünschtem "Papierwellen" kommen. Darüber hinaus sinkt die Viskosität der Klebesysteme mit steigendem Wasseranteil, einhergehend mit einer verringerten Festigkeit der Stifte und schlechteren Abriebeigenschaften. Die verringerte Festigkeit kann dazu führen, dass die Stifte beim Auftragen der Klebemasse auf die zu verklebenden Flächen leicht brechen. Die geringere Abriebqualität äußert sich in einem ungleichmäßigen Auftrag, der Stift verliert einzelne "Bröckchen". Ein weiterer Nachteil der bisher bekannten wässrigen Zubereitungen für Klebestifte besteht darin, dass sie nicht ausreichend lagerstabil sind. Insbesondere Zucker und Stärke enthaltende Lösungen bzw. Dispersionen vergilben sehr stark.

Reduziert man hingegen die enthaltene Wassermenge zu stark, um den negativen Folgen des Wassergehaltes zu begegnen, kommt es zu Entmischungserscheinungen und zur Ausbildung einer zu spröden Stiftmasse, wodurch sowohl die Klebeeigenschaften als auch das Auftragsverhalten nachteilig beeinflusst werden.

Es besteht daher Bedarf an Klebestiften, die die vorstehend aufgeführten Nachteile nicht aufweisen und die insbesondere sehr gute Festigkeit in Verbindung mit hervorragenden Abriebeigenschaften bei gleichzeitig hoher Lagerstabilität aufweisen. Diese Anforderungen sind gegenläufig und innerhalb eines wässrigen Systems nicht ohne weiteres zu realisieren, da beispielsweise hohe Festigkeiten durch den Entzug von Wasser begünstigt werden, hohe Lagerstabilität hingegen durch einen möglichst hohen Wasseranteil in der Zubereitung.

Aufgabe der vorliegenden Erfindung ist es daher, einen Klebestift bereitzustellen, der gegenüber den aus dem Stand der Technik bekannten Klebestiften eine verbesserte Festigkeit in Kombination mit hervorragenden Abriebeigenschaften sowie guter Klebkraft und Lagerstabilität zeigt. Darüber hinaus soll die dem Stift zugrunde liegende Mischung unter den bei der Herstellung herrschenden Bedingungen - insbesondere also bei Temperaturen oberhalb von 50°C - eine für das problemlose Einbringen der Klebemasse in die Stifthülsen geeignete Viskosität aufweisen.

Die Lösung der Aufgabe ergibt sich aus dem Grundgedanken der Erfindung, den Formulierungen der Klebestifte Superabsorber zuzusetzen und damit die bekannte Wasser retardierende Wirkung dieser Partikel zur Verbesserung des Eigenschaftsprofils der Stifte auszunutzen.

Gegenstand der Erfindung ist daher ein Klebestift, der eine wässrige Zubereitung mindestens eines makromolekularen Stoffes und Seife enthält und der dadurch gekennzeichnet ist, dass der Klebestift mindestens einen Superabsorber enthält. Bei dem makromolekularen Stoff der wässrigen Zubereitung handelt es sich dabei nicht um den Superabsorber, dieser ist als zusätzliche Komponente zu der wässrigen Zubereitung eines makromolekularen Stoffes zu verstehen.

Gemäß der oben stehenden Definition wird unter einem Klebestift ein stäbchenförmiger Klebstoff verstanden, der in einer verschließbaren Hülle verschiebbar gelagert ist und beim Abreiben auf einer Substratoberfläche einen klebrigen Film hinterlässt. Der Begriff "Klebestift" umfasst im Rahmen der vorliegenden Erfindung nur den Klebstoff als solchen und keinesfalls die Hülle oder Vorrichtungen zur Verschiebung der Stiftmasse.

In einer spezifischen Ausführungsform ist der Gegenstand der vorliegenden Erfindung ein stäbchenförmiger, in einer verschließbaren Hülle verschiebbar gelagerter und beim Abreiben auf einer Substratoberfläche einen klebrigen Film hinterlassender Klebstoff, der eine wässrige Zubereitung mindestens eines makromolekularen Stoffes und 3 bis 20 Gew.-%, bezogen auf das Gesamtgewicht des Klebstoffs, Seife enthält und der dadurch gekennzeichnet ist, dass er Partikel aus synthetischen oder teilsynthetischen Materialien enthält, die mindestens das Vierfache ihrer Masse an Wasser aufnehmen können.

Ein erfindungsgemäßer Klebestift zeichnet sich durch verbesserte Festigkeit und einen gleichmäßigeren Abrieb gegenüber bekannten Klebestiften bei hervorragenden Klebe- und Lagereigenschaften aus. Die Verklebungen behalten auch bei längeren Lagerzeiten ihre weiße Farbe bei und vergilben nicht. Bei Temperaturen um 80°C zeigt die dem Stift zugrunde liegende Klebemischung zudem eine solche Viskosität, dass sie einerseits leicht in die Stifthülsen eingebracht werden kann, andererseits aber auch nicht durch undichte Stellen im Ansatzbereich der Stiftschraube wieder aus der Hülse austritt.

Der Erfindung liegt die Absicht zugrunde, mit den vorliegend beschriebenen Klebestiften dauerhafte Verklebungen von Substraten zu realisieren. Der Gegenstand der Erfindung ist daher insbesondere ein Klebestift zum dauerhaften flächigen Verbinden von Substraten, insbesondere von Papier, Pappe, Holz und /oder Kunststoff miteinander, der eine wässrige Zubereitung mindestens eines makromolekularen Stoffes und Seife enthält und der dadurch gekennzeichnet ist, dass er mindestens einen Superabsorber enthält.

Unter einem "makromolekularen Stoff" wird im Kontext der vorliegenden Erfindung jeder Stoff verstanden, dessen Moleküle mindestens zehn konstitutionell identische Repetiereinheiten aufweisen.

Unter Superabsorbern werden im Rahmen der vorliegenden Erfindung Partikel aus synthetischen oder zumindest teilsynthetischen Materialien verstanden, die mindestens das Vierfache, bevorzugt mindestens das Zehnfache und besonders bevorzugt mindestens das Einhundertfache ihrer Masse an Wasser aufnehmen können. Allen Superabsorbern ist trotz Unterschieden im chemischen Aufbau gemein, dass sie in der Lage sind, auch unter einer mäßigen Druckbelastung das vorstehend aufgeführte Vielfache ihrer Masse an wässrigen Flüssigkeiten aufzunehmen und zurückzuhalten. Superabsorber, wie sie im Kontext der vorliegenden Erfindung beschrieben und eingesetzt werden, sind bisher insbesondere von ihren Anwendungen in Babywindeln und speziellen Hygieneprodukten bekannt.

Der mindestens eine Superabsorber ist im erfindungsgemäßen Klebestift bevorzugt in Form von Partikeln mit einer Korngröße von 1 bis 1000 µm enthalten. In diesem Korngrößenbereich sind die Permeabilität und damit die Absorptionseigenschaften der Superabsorber vorteilhaft ausgeprägt. Besonders bevorzugt weist der Superabsorber einen mittleren Teilchendurchmesser von maximal 150 µm, stärker bevorzugt von maximal 100 µm, beispielsweise von maximal 70 µm, auf. Ein derartiger Klebestift zeichnet sich insbesondere durch einen sparsameren Auftrag bei gleich bleibender Klebeleistung und nochmals verbesserte Lagerstabilität der Verklebung aus. Die Begriffe "Korngröße" und "mittlerer Teilchendurchmesser" werden als äquivalent angesehen. Bei annähernd kugelförmigen Teilchen wird deren Durchmesser verwendet. Bei unregelmäßig geformten Körpern wird von deren Volumen ausgegangen und der Durchmesser der volumengleichen Kugel angegeben (Äquivalentdurchmesser).

Vorzugsweise enthält der Klebestift als Superabsorber Partikel aus synthetischen Materialien, insbesondere aus absorbierenden Polymeren. Dabei kann es sich beispielsweise um gepfropfte Copolymere auf der Basis von Stärke und Acrylaten, um Stärkeacrylnitrilpfropfpolymere bzw. deren Hydrolyseprodukte, um Carboxymethylcellulose, vernetzte und teilneutralisierte Copolymere von Isobutylen und Maleinsäureanhydrid, Polymere auf Basis ethylenisch ungesättigter Monomere mit mindestens einer Säuregruppe, Polyvinylalkohole, Polyethylenoxide und/oder Polyacrylnitrile handeln. Besonders bevorzugt ist im Rahmen der vorliegenden Erfindung der Superabsorber ein Polymer, das durch Polymerisation wenigstens eines ethylenisch ungesättigten Monomeren mit mindestens einer Säuregruppe erhältlich ist. Die im Polymer enthaltenen Säuregruppen können dabei teilweise oder vollständig neutralisiert sein.

Bevorzugte ethylenisch ungesättigte Monomere mit mindestens einer Säuregruppe sind Acrylsäure, Methacrylsäure, Ethacrylsäure, a-Chloracrylsäure, a-Cyanoacrylsäure, β-Methylacrylsäure (Crotonsäure), a-Phenylacrylsäure, β-Acryloxypropionsäure, Sorbinsäure, a-Chlorsorbinsäure, 2'-Methylisocrotonsäure, Zimtsäure, p-Chlorzimtsäure, Stearylsäure, Itaconsäure, Citraconsäure, Mesacronsäure, Glutaconsäure, Aconitsäure, Maleinsäure, Fumarsäure, Tricarboxyethylen, Maleinsäureanhydrid; hydroxyl- oder aminogruppenhaltige Ester der vorstehenden Säuren, vorzugsweise der Acryl- oder Methacrylsäure, beispielsweise 2-Hydroxyethylacrylat, N,N-Dimethylaminoethylacrylat sowie die analogen Derivate der Methacrylsäure.

Ein im Rahmen der vorliegenden Erfindung als Superabsorber einsetzbares Polymer kann darüber hinaus auf weiteren ethylenisch ungesättigten Comonomeren basieren, bei denen es sich bevorzugt um Sulfonsäuremonomere, Phosphonsäuremonomere und/oder Acrylamide handelt. Unter "basieren" wird im Kontext der vorliegenden Erfindung verstanden, dass das betreffende Polymer durch Polymerisation der angegebenen Monomere erhältlich ist.

Ethylenisch ungesättigte Sulfonsäuremonomere sind vorzugsweise aliphatische oder aromatische Vinylsulfonsäuren oder acrylische oder methacrylische Sulfonsäuren. Als aliphatische oder aromatische Vinylsulfonsäuren sind Vinylsulfonsäure, Allylsulfonsäure, 4-Vinylbenzylsulfonsäure, Vinyltoluolsulfonsäure und Styrolsulfonsäure bevorzugt. Als Acryl- bzw. Methacrylsulfonsäuren sind Sulfoethylacrylat, Sulfoethylmethacrylat, Sulfopropylacrylat, Sulfopropylmethacrylat, 2-Hydroxy-3-methacryloxypropylsulfonsäure und 2-Acrylamid-2-methylpropansulfonsäure bevorzugt.

Ferner sind ethylenisch ungesättigte Phosphonsäuremonomere wie Vinylphosphonsäure, Allylphosphonsäure, Vinylbenzylphosphonsäure, Acrylamidoalkylphosphonsäuren, Acrylamidoalkyldiphosphonsäuren, phosphonomethylierte Vinylamine und (Meth)acrylphosphonsäurederivate bevorzugt.

Mögliche Acrylamide sind alkylsubstituierte Acrylamide oder aminoacylsubstituierte Derivate des Acrylamides oder des Methacrylamides, wie N-Vinylamide, N-Vinylformamide, N-Vinylacetamide, N-Vinyl-N-Methylacetamide, N-Vinyl-N-methylformamide, N-Methylol(meth)acrylamid, Vinylpyrrolidon, N,N-Dimethylpropylacrylamid, Dimethylacrylamid oder Diethylacrylamid und/oder die entsprechenden Methacrylamidderivate sowie Acrylamid und Methacrylamid, wobei Acrylamid bevorzugt ist.

In Mengen von 0,01 bis 20, bevorzugt von 0,1 bis 15 und besonders bevorzugt von 0,5 bis 5 Gew.-%, bezogen auf die insgesamt eingesetzten Monomere, können als Comonomere auch Monomere mit einer geringen Löslichkeit in Wasser eingesetzt werden. Beispiele für derartige Monomere sind Acrylsäure- und Methacrylsäureester wie Ethylacrylat und Ethylmethacrylat, Butylacrylat und Butylmethacrylat, Vinylacetat, Styrol oder Isobutylen oder Gemische aus zwei oder mehr davon.

Weiterhin können in Mengen von 0,01 bis 20, bevorzugt von 0,1 bis 15 und besonders bevorzugt von 0,5 bis 5 Gew.-%, bezogen auf die insgesamt eingesetzten Monomere, wasserlösliche Polymere der Monomerlösung zugesetzt werden. Beispiele sind Polymere oder Copolymere der oben beschriebenen Monomere wie Polyacrylsäure, teilweise verseiftes Polyvinylacetat, Polyvinylalkohol, Polyalkylenglykole, Stärke und Stärkederivate, Cellulose und Cellulosederivate sowie andere Polysaccharide.

Alle aufgeführten Säuren können als freie Säuren oder als Salze polymerisiert werden. Auch eine teilweise Neutralisation ist möglich. Ferner kann eine vollständige oder teilweise Neutralisation auch nach der Polymerisation erfolgen. Die Neutralisation der Monomere kann mit Alkalimetallhydroxiden, Erdalkalimetallhydroxiden, Ammoniak sowie Carbonaten oder Bicarbonaten oder Gemischen aus zwei oder mehr davon erfolgen. Daneben ist grundsätzlich jede weitere Base geeignet, die mit der zu neutralisierenden Säure ein wasserlösliches Salz bildet. Auch eine Mischneutralisation mit verschiedenen Basen ist möglich. Bevorzugt ist die Neutralisation mit Ammoniak und/oder Alkalimetallhydroxiden, besonders bevorzugt mit Natriumhydroxid und/oder Ammoniak.

Aus den vorgenannten Monomeren lässt sich ein gemäß der vorliegenden Erfindung einsetzbarer Superabsorber durch verschiedene Polymerisationsweisen herstellen. Beispielsweise sind in diesem Zusammenhang Massepolymerisation, Lösungspolymerisation, Sprühpolymerisation, inverse Emulsionspolymerisation und inverse Suspensionspolymerisation zu nennen. Bevorzugt wird die Lösungspolymerisation in Wasser als Lösungsmittel durchgeführt. Die Lösungspolymerisation kann kontinuierlich oder diskontinuierlich erfolgen. Dem Fachmann ist ein breites Spektrum von Variationsmöglichkeiten hinsichtlich der Reaktionsverhältnisse wie Temperaturen, Art und Menge der Initiatoren als auch der Reaktionslösung bekannt.

Bevorzugt ist der Superabsorber das Salz, insbesondere das Alkalisalz und besonders bevorzugt das Natriumsalz einer vernetzten Polyacrylsäure. Unter "Salz" wird verstanden, dass alle Säuregruppen der Polyacrylsäure neutralisiert vorliegen.

Ein im Rahmen der vorliegenden Erfindung einsetzbarer Superabsorber kann beispielsweise durch chemische Vernetzung, durch thermische Vernetzung oder Strahlenvernetzung oder durch zwei oder mehr der genannten Verfahren vernetzt sein, wobei die Vernetzung durch einen chemischen Vernetzer bevorzugt ist.

Die chemische Vernetzung wird durch dem Fachmann allgemein bekannte Vernetzer erreicht. Derartige Vernetzer werden vorzugsweise in einer Menge von weniger als 7, bevorzugt von 0,1 bis 5 Gew.-%, bezogen auf das Gesamtgewicht der eingesetzten Monomere, eingesetzt. Bevorzugte Vernetzer sind Polyacryl- oder Polymethacrylsäureester, die beispielsweise durch die Umsetzung eines Polyols oder ethoxylierten Polyols wie Ethylenglykol, Propylenglykol, Trimethylolpropan, 1,6-Hexandiol, Glycerin, Pentaerythrit, Polyethylenglykol oder Polypropylenglykol mit Acrylsäure oder Methacrylsäure gewonnen werden. Als Vernetzer können auch Polyole, Aminoalkohole sowie deren Mono(meth)acrylsäureester und Monoallylether eingesetzt werden. Weiterhin sind auch Acrylsäureester der Monoallylverbindungen der Polyole und Aminoalkohole als Vernetzer geeignet. Als geeignete Vernetzer kommen beispielsweise in Betracht: 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, ethoxyliertes Bisphenol-A-diacrylat, ethoxyliertes Bisphenol-A-dimethacrylat, 1,6-Hexandioldiacrylat, 1,6-Hexandioldimethacrylat, Neopentylglykoldimethacrylat, Polyethylenglykoldiacrylat, Polyethylenglykoldimethacrylat, Triethylenglykoldiacrylat, Triethylenglykoldimethacrylat, Tripropylenglykoldiacrylat, Tetraethylenglykoldiacrylat, Tetraethylenglykoldimethacrylat, Dipentaerythritpentaacrylat, Pentaerythrittetraacrylat, Pentaerythrittriacrylat, Trimethylolpropantriacrylat, Trimethyloltrimethacrylat, Tris(2-hydroxyethyl)isocyanurattriacrylat, Tris(2-hydroxy)isocyanurattrimethacrylat, Divinylester von Polycarbonsäuren, Diallylester von Polycarbonsäuren, Triallylterephthalat, Diallylmaleat, Diallylfumarat, Hexamethylenbismaleinimid, Trivinyltrimellithat, Divinyladipat, Diallylsuccinat, ein Ethylenglykoldivinylether, Cyclopentadiendiacrylat, Triallylamin, Tetraallylammoniumhalide, Divinylbenzol, Divinylether, N,N-Methylenbisacrylamid, N,N'-Methylenbismethacrylamid und Ethylenglykoldimethacrylat. Hierunter bevorzugte Vernetzer sind N,N'-Methylenbisacrylamid, N,N'-Methylenbismethacrylamid, Polyethylenglykoldiacrylat, Polyethylenglykoldimethacrylat oder Triallylamin oder Gemische aus zwei oder mehr der genannten Verbindungen.

Im Rahmen der vorliegenden Erfindung einsetzbare Superabsorber können beispielsweise auch nachvernetzt sein. Als sogenannte "Nachvernetzer" geeignet sind organische Carbonate, polyquaternäre Amine, polyvalente Metallverbindungen und Verbindungen, die mindestens zwei funktionelle Gruppen aufweisen, die mit Carboxylgruppen des unbehandelten Superabsorbers reagieren können. Hierbei handelt es sich insbesondere um Polyole und Aminoalkohole wie Ethylenglykol, Diethylenglykol, Triethylenglykol, Tetraethylenglykol, Polyethylenglykol, Glycerin, Polyglycerin, Propylenglykol, Ethanolamin, Diethanolamin, Triethanolamin, Propanolamin, Polyoxypropylen, Oxyethylen-Oxypropylen-Blockpolymere, Sorbitanfettsäureester, Polyoxyethylensorbitanfettsäureester, Trimethylolpropan, Pentaerythrit, Polyvinylalkohol und Sorbitol, Polyglycidyletherverbindungen, wie Ethylenglykoldiglycidylether, Polyethylenglykoldiglycidylether, Glycerindiglycidylether, Glycerolpolyglycidylether, Pentaerythritpolyglycidylether, Propylenglycoldiglycidylether und Polypropylenglycoldiglycidylether, Polyaziridin-Verbindungen, wie 2,2-Bishydroxymethylbutanol-tris[3-(1-aziridinyl)propionat], 1,6-Hexamethylendiethylen-Harnstoff und Diphenylmethan-bis-4,4'-N,N'-diethylenharnstoff, Haloepoxyverbindungen wie Ethylendiamin, Diethylentriamin, Triethylentetramin, Tetraethylenpentamin, Pentaethylenhexamin und Polyethylenimine, Polyisocyanate wie 2,4-Toluylendiisocyanat und Hexamethylendiisocyanat, Zinkhydroxide, Kalzium-, Aluminium-, Eisen-, Titan-und Zirkonhalogenide, Alkylencarbonate wie 1,3-Dioxalan-2-on und 4-Methyl-1,3-Dioxalan-2-On, polyvalente Metallverbindungen wie Salze, polyquaternäre Amine wie Kondensationsprodukte von Dimethylaminen und Epichlorhydrin, Homo-und Copolymere von Diallyldimethylamoniumchlorid und Homo-und Copolymere von Diethylamino(meth)acrylatmethylchloridammoniumsalzen. Unter diesen Verbindungen sind bevorzugt Diethylenglykol, Triethylenglykol, Polyethylenglykol, Glyzerin, Polyglyzerin, Propylenglykol, Diethanolamin, Triethanolamin, Polyoxypropylen, Oxyethylenoxypropylen Blockcopolymer, Sorbitanfettsäureester, Polyoxyethylensorbitanfettsäureester, Trimethylolpropan, Pentaerythrit, Polyvinylalkohol, Sorbitol, Alkylencarbonate wie 1,3-Dioxolan-2-on, 1,3-Dioxolan-2-on, 4-Methyl-1,3-dioxolan-2-on, 4,5-Dimethyl-1,3-dioxolan-2-on, 4,4-Dimethyl 1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxopan-2-on, Poly₋1,3-dioxolan-2-on und Ethylenglykoldiglycidylether, Polyoxazoline wie 1,2-Ethylenbisoxazolin, Vernetzer mit Silangruppen wie γ-Glycidoxypropyltrimethoxysilan und γ-Aminopropyltrimethoxysilan, Oxazolidinone wie 2-Oxazolidinon, Bis-und Poly-2-oxazolidinone sowie Diglykolsilikate.

Die erfindungsgemäß bevorzugt eingesetzten vernetzten Superabsorber weisen hervorragende Wasser retardierende Eigenschaften auf, wodurch die Viskosität der Stiftmasse erhöht wird. Überraschend treten jedoch noch weitere positive Effekte auf. So ist vorteilhaft auch die Lagerstabilität - insbesondere bei Zucker und Stärke enthaltenden Mischungen - signifikant verbessert. Zusätzlich werden bessere Festigkeiten und Abriebeigenschaften erzielt. Der Klebestift trägt sehr gleichmäßig, das hheißt unter nur sehr geringem Abwurf von Brocken auf, ohne dabei zu viel an Masse zu verlieren.

Bevorzugt enthält der Klebestift den Superabsorber in einer Menge von 0,2 bis 3 Gew.-%, bezogen auf die Gesamtmasse des Klebestiftes. Innerhalb dieser Spanne wird ein besonders ausgewogenes Verhältnis von hervorragender Festigkeit der erstarrten Stiftmasse und einer hohen Lagerstabilität erreicht. Besonders bevorzugt ist der Superabsorber in einer Menge von 0,3 bis 2 Gew.-%, bezogen auf die Gesamtmasse des Klebestiftes, enthalten. Insbesondere beträgt der Anteil des Superabsorbers 0,4 bis 1,2 Gew.-%, bezogen auf die Gesamtmasse des Klebestiftes. Innerhalb dieser Bandbreite werden optimale Festigkeitswerte bei konstant guter Lagerstabilität erhalten.

Ein erfindungsgemäßer Klebestift enthält eine wässrige Zubereitung eines makromolekularen Stoffes. Es können dabei beliebige geeignete makromolekulare Stoffe eingesetzt werden, die unter Anwendungsbedingungen eine ausreichende Klebewirkung zeigen und daher als klebende Komponente des Stiftes eingesetzt werden können. Die wässrige Zubereitung eines makromolekularen Stoffes enthält bevorzugt einen makromolekularen Stoff, der aus Stärkederivaten, Polyvinylacetalen, Polyacrylaten, Polyurethanen, Polyvinylpyrrolidon, Alkoholen, Cellulosen, Proteinen und/oder Gemischen davon ausgewählt ist. Wässrige Zubereitungen dieser Substanzen weisen Klebstoffcharakter auf und sind in dieser Anwendung hinreichend erprobt. Sie sind deshalb als klebende Komponente für einen erfindungsgemäßen Klebestift gut geeignet. Mit den Stärkederivaten, Proteinen und Cellulosen ergeben sich darüber hinaus interessante Alternativen auf der Basis natürlicher, nachwachsender Rohstoffe.

Besonders bevorzugt enthält die wässrige Zubereitung mindestens eines makromolekularen Stoffes mindestens einen Stoff, ausgewählt aus viskositätsreduzierten Stärkeethern, Polyvinylpyrrolidon, Polyurethanen, Polyvinylalkoholen und/oder Gemischen davon. Unter "viskositätsreduzierten" Stärkeethern werden Stärkeether verstanden, die nicht nur weitgehend polymeranalog verethert wurden, sondern darüber hinaus auch noch chemisch oder physikalisch so destrukturiert wurden, dass ihre Viskosität kleiner als ca. 2.000.000 mPas ist (30 %ige Lösung, 20 °C, Brookfield). Die vorstehend aufgeführten Komponenten haben sich als am besten geeignet erwiesen, um Klebestifte mit hoher Festigkeit herzustellen. Sie lassen sich mit der Seife problemlos mischen und fügen sich optimal in die durch das Seifengel ausgebildete Gerüststruktur ein. Hingegen ist beispielsweise bei Acrylharzen/Polyacrylaten häufig zu beobachten, dass unzulängliche Gerüststrukturen ausgebildet werden, weil zum einen das Molekulargewicht solcher Harze oft nicht groß genug ist und zum anderen die Verträglichkeit mit dem Seifengel nicht gegeben ist, um stabile Gerüststrukturen ausbilden zu können und auf dieser Grundlage Klebestifte mit sehr guter Festigkeit zu erhalten.

Ganz besonders bevorzugt enthält die wässrige Zubereitung mindestens eines makromolekularen Stoffes mindestens einen nicht ionischen Stärkeether, der durch Umsetzung von nativen Stärken mit Ethylenoxid, Propylenoxid, Butylenoxid und/oder Glycid erhältlich ist. Dabei kann die Umsetzung mit einem der genannten Stoffe allein, mit Gemischen der Stoffe oder sequentiell mit mehreren der Stoffe erfolgen, beispielsweise zunächst mit Ethylenoxid und sodann mit Propylenoxid. Hierdurch wird ein Ethylenoxidblock angeknüpft, an den sich ein Propylenoxidblock anschließt. Ein derartiger Klebestift zeichnet sich insbesondere durch hohe Klebkraft auch nach mehrmonatiger Lagerung bei unterschiedlicher Art von Feuchtklima aus.

Nach Ullmann, Encyklopädie der technischen Chemie, 4. Auflage, Verlag Chemie, Weinheim/Bergstraße (1974) sind Stärkeether formal Produkte der Kondensation zwischen den Hydroxygruppen der Anhydroglucose-Einheiten (AGE) von Stärkemolekülen und alkoholischen Hydroxygruppen anderer Verbindungen. Nur einige wasserlösliche dieser Stärkeethertypen werden in größerem Umfang hergestellt und industriell eingesetzt. Hierzu gehören bestimmte Hydroxyalkylstärken, speziell Hydroxyethyl- und Hydroxypropylstärke sowie Carboxymethylstärke. Als besonders geeignet für den erfindungsgemäßen Klebestift haben sich Umsetzungsprodukte von nativen Stärken mit Ethylenoxid, Propylenoxid, Butylenoxid und/oder Glyciden erwiesen. Insbesondere Stärkederivate mit höheren Substitutionsgraden, vorzugsweise nicht ionogene Stärkeether, lassen sich vorteilhafterweise bei mechanischer Behandlung in wässrigen Systemen durch den Abbau von kristallinen Strukturen und/oder durch oxidativen, säurehydrolytischen, enzymatischen und thermischen Abbau auf ein relativ niedriges Viskositätsniveau einstellen und sind deshalb in besonderem Maße geeignet. Besonders bevorzugt sind also viskositätsreduzierte nichtionische Stärkeether, insbesondere Hydroxyalkylstärke, da mit diesen am besten die gewünschten Klebestifte erhalten werden. Vorzugsweise sollte der Substitutionsgrad (DS) 0,1 bis 2,0, insbesondere 0,2 bis 1,0 betragen. Es können auch Mischveretherungsprodukte verwendet werden. Ein erfindungsgemäßer Klebestift enthält vorzugsweise 30 bis 70 Gew.-% einer wässrigen Zubereitung von viskositätsreduzierten Stärkeethern beziehungsweise 6 bis 49 Gew.-%, bevorzugt 9 bis 42 Gew.-%, viskositätsreduzierte Stärkeether. Dabei ist die Gewichtsprozentangabe auf die Gesamtmasse des Stiftes bezogen.

Zur Herstellung der erfindungsgemäß einsetzbaren Stärkeether lassen sich im Prinzip alle nativen Stärken einsetzen. Geeignete Stärken lassen sich dem genannten Ullmann, Band 22 in den Unterkapiteln 6.2 bis 6.4 zum Kapitel "Stärke" entnehmen. Neben den Getreidestärken wie Mais-, Weizen- oder Reisstärke sowie Knollen- oder Wurzelstärken wie Kartoffel- oder Tapiokastärke sind auch Leguminosenstärken wie Erbsen- oder Bohnenstärke geeignet.
Die wässrigen Zubereitungen der viskositätsreduzierten Stärkeether werden vorzugsweise dadurch hergestellt, dass man die Stärkeether mit Wasser mischt und die Überstrukturen der Stärkeether durch physikalische, insbesondere mechanische Einwirkung - weitestgehend irreversibel - abbaut und/oder die Stärkeether chemisch abbaut, z. B. oxidiert, säurekatalytisch, enzymatisch bzw. thermisch abbaut. Auch eine Kombination der Einwirkungen ist möglich. Dabei werden konzentrierte Systeme mit einem Stärkeethergehalt von etwa 20 bis 70 Gew.-% bevorzugt, da sich erwiesen hat, dass in diesen Konzentrationsbereichen die technische Handhabung am einfachsten ist. Anschließend können die wässrigen Zubereitungen mit den übrigen Bestandteilen in beschriebener Weise zusammengebracht werden. Gewünschtenfalls können die Stärkederivatzubereitungen vor dem Vermengen mit den anderen Bestandteilen verdünnt werden, vorzugsweise auf einen Stärkeethergehalt von 30 bis 60 Gew.-%.

Der mechanische Abbau der Strukturen derartiger wässriger Systeme kann in dem Fachmann bekannten mechanischen Vorrichtungen erfolgen. Als solche Vorrichtungen eignen sich Kneter, Extruder, Stator/Rotor-Maschinen und/oder Rührwerke. Der Grad des mechanischen Abbaus der Überstrukturen der wässrigen Stärkederivatsysteme ist abhängig von der Konzentration, der Temperatur, der Verweilzeit und der Scherung. Der Abbaugrad der Stärkeüberstrukturen sollte vorteilhafterweise nahe am erreichbaren Grenzwert liegen. Der Abbaugrad kann durch die Bestimmung der Lösungsviskositäten ermittelt werden. Ohne Nachteile kann der Abbau der Stärkeüberstrukturen auch während der Herstellung der Klebestiftmassen in Ansatzvorrichtungen erfolgen, in denen ein ausreichender Abbaugrad der Stärkeüberstrukturen erreicht werden kann.

Der mechanische Abbau der Stärke- bzw. Stärkeetherüberstrukturen kann durch einen chemischen Abbau der Stärkemoleküle auf das erfindungsgemäße Viskositätsniveau ergänzt oder ersetzt werden. Der (partielle) chemische Abbau der Stärke- bzw. Stärkeethermoleküle kann sowohl vor als auch nach dem mechanischen Abbau der Stärkeüberstrukturen durchgeführt werden. Ebenso können beide Prozesse auch voneinander unabhängig alleine durchgeführt werden. Die Viskositätsreduzierung der Stärkeetherlösung kann auch ausschließlich durch einen chemischen Abbau auf das erfindungsgemäße Viskositätsniveau erfolgen. Der Abbau der Stärkemoleküle kann nach dem Fachmann bekannten Verfahren durch oxidativen, säurehydrolytischen, enzymatischen oder thermischen Abbau erfolgen.

In "Ullmanns Encyklopädie der technischen Chemie", 4. Auflage, Verlag Chemie, Weinheim (1974) sind die üblichen Verfahren zum Abbau von Stärken näher beschrieben. Bevorzugte Oxidationsmittel für den oxidativen Abbau sind Chromsäure, Permanganat, Wasserstoffperoxid, Stickstoffdioxid, Hypochlorit, Perjodat und Persäuren wie z.B. Peressigsäure. Als Säuren für den säurehydrolytischen Abbau werden bevorzugt Salzsäure, Schwefel- oder Phosphorsäure eingesetzt, aber auch die Verwendung anderer Säuren wie z. B. Essigsäure, Oxalsäure, schweflige Säure, Perchlorsäure oder Trichloressigsäure ist möglich. Als Stärke abbauende Enzyme können α- und β-Amylasen sowie die Glucoamylasen und entzweigende Enzyme eingesetzt werden.

Ein ausreichender Abbaugrad im Sinne der Erfindung ist zweckmäßigerweise erreicht, wenn eine 30 Gew.-%ige wässrige Lösung des verwendeten Stärkeethers bei 20 °C eine Viskosität nach Brookfield von etwa 100 bis 1 000 000 mPas, vorzugsweise 2 000 bis 100 000 mPas, insbesondere 3 000 bis 30 000 mPas aufweist, jeweils in Lösung mit 30 % Festkörpergehalt gemessen (Brookfield, 20 °C). Als besonders geeignet haben sich Klebestifte erwiesen, die 5 bis 10 Gew.-% der erfindungsgemäßen Stärkeether mit einer Viskosität von 1 000 000 bis 50 000 mPas oder 10 bis 30 Gew.-% mit einer Viskosität von 100 000 bis 2 000 mPas oder 30 bis 50 Gew.-% mit einer Viskosität von 30 000 bis 100 mPas enthalten. Die Gew.-% beziehen sich auf das Gesamtgewicht des Klebestiftes.

Anstelle der bzw. neben den viskositätsreduzierten Stärkeether/n kann der Klebestift auch die anderen bereits aufgeführten wasserlöslichen und/oder wasserdispergierbaren Polymere (z. B. Polyurethan-Dispersionen, Polyvinylpyrrolidon und/oder Polyvinylalkohole) in wässriger Zubereitung als klebende Komponente enthalten. Der Gehalt an PVP liegt vorzugsweise bei 0 %.
Der Anteil der wässrigen Zubereitung mindestens eines makromolekularen Stoffes, bezogen auf die Gesamtmasse des Klebestiftes, in einem erfindungsgemäßen Klebestift beträgt bevorzugt 30 bis 70 Gew.-%, stärker bevorzugt 40 bis 60 Gew.-% und ganz besonders bevorzugt 48 bis 58 Gew.-%. Der Anteil des in der wässrigen Zubereitung enthaltenen makromolekularen Stoffes an der Gesamtmasse eines erfindungsgemäßen Klebestiftes beträgt bevorzugt 6 bis 49 Gew.-%, stärker bevorzugt 9 bis 42 Gew.-% und besonders bevorzugt 12 bis 36 Gew.-%. Ganz besonders bevorzugt beträgt der Anteil des makromolekularen Stoffes 15 bis 34 Gew.-%, bezogen auf die Gesamtmasse des Klebestiftes.

Ein erfindungsgemäßer Klebestift enthält darüber hinaus Seife. Bevorzugt ist die Seife das Natriumsalz von C₁₂- bis C₂₂-Fettsäuren, insbesondere von C₁₄- bis C₁₈-Fettsäuren, natürlichen oder synthetischen Ursprungs. Die Seife bzw. das Seifengel dient vor allem als Form gebende Gerüstsubstanz. Natriumsalze der Fettsäuren sind härter als beispielsweise die entsprechenden Kaliumsalze und daher gut als Gerüstbildner geeignet.

Vorzugsweise ist die Seife im erfindungsgemäßen Klebestift in Mengen von 3 bis 20, besonders bevorzugt von 4 bis 10 Gew.-%, bezogen auf die Gesamtmasse des Klebestiftes, enthalten. In diesen Anteilen kann das Seifengel optimal die gewünschte Gerüststruktur ausbilden, welche die Basis für die hervorragende Festigkeit des erfindungsgemäßen Klebestiftes bildet. Andererseits lässt sich die Gerüststruktur beim Abreiben auf der zu verklebenden Fläche aber auch hinreichend leicht zerstören, so dass dann wie gewünscht der Klebstoffcharakter der Zubereitung in den Vordergrund tritt.

In einem erfindungsgemäßen Klebestift können die bei Klebestiften üblichen Hilfsstoffe in Mengen von 0 bis 25 Gew.-%, bezogen auf die Gesamtmasse des Klebestiftes, mit eingesetzt werden. Dies sind beispielsweise Weichmacher und/oder die Feuchtigkeit regulierende Stoffe, beispielsweise organische wasserlösliche Lösungsmittel, die üblicherweise in Klebestiften verwendet werden. Die nicht-flüchtigen organischen Lösungsmittel sollten hierbei bevorzugt höchstens in Mengen bis 50 Gew.-%, bezogen auf den Wassergehalt der Stifte, eingesetzt werden. Mit eingesetzt werden können weiterhin mehrwertige (polyfunktionelle) Alkohole wie Propylenglykol, Glycerin, Polyglycerine, Trimethylolpropan, Polyetherglykole sowie Sorbit und/oder niedermolekulare Stärkehydrolysate, die durch Wasserstoffreduktion in die entsprechenden Polyole umgesetzt wurden. Es kann beispielsweise ein Gemisch aus Glycerin und Polyethylenglykol mitverwendet werden. Vorzugsweise beträgt der Gehalt an Glycerin und Propylenglykol, speziell Propylenglykol, 0 bis 15, insbesondere 5 bis 10 Gew.-%, bezogen auf den gesamten Klebestift.

Ein erfindungsgemäßer Klebestift kann zusätzlich Gelatine enthalten. Die Menge an Gelatine beträgt vorzugsweise 0 bis 10 Gew.-% und insbesondere 1,5 bis 5 Gew.-%, bezogen auf die Gesamtmasse des Klebestiftes. Es können dabei beliebige Gelatinequalitäten eingesetzt werden.

Darüber hinaus kann in einem erfindungsgemäßen Klebestift eine Kombination aus mineralischem Füllstoff, insbesondere Bariumsulfat, und Gelatine eingesetzt werden. Es kann dabei zu einer synergistischen Eigenschaftsverbesserung der Klebeeigenschaften durch die Kombination von mineralischem Füllstoff, insbesondere Bariumsulfat, und Gelatine kommen.

Ferner kann erfindungsgemäß zusätzlich ein Verdickungsmittel, z. B. auf Cellulosebasis wie Carboxymethylcellulose, in einer Menge von 1 bis 3 Gew.-%, bezogen auf die Gesamtmasse des Klebestiftes, eingesetzt werden. Besonders bevorzugt beträgt die Menge an Verdickungsmittel 1,5 bis 2,4 Gew.-%, bezogen auf die Gesamtmasse des Klebestiftes.

In einer weiteren Ausführungsform der vorliegenden Erfindung enthält der Klebestift Saccharose. Saccharose als preiswerte und darüber hinaus völlig unbedenkliche Substanz ist hervorragend als Füllstoff für einen erfindungsgemäßen Klebestift geeignet. Bevorzugt beträgt der Gehalt an Saccharose, bezogen auf die Gesamtmasse des Klebestiftes, 15 bis 25, stärker bevorzugt 17 bis 22 Gew.-%.

Neben den bisher aufgeführten Komponenten können weitere übliche Hilfsmittel mitverwendet werden, beispielsweise Substanzen, die den leichten und weichen Abrieb fördern. Derartige Substanzen sind beispielsweise Aminocarbonsäuren und/oder ihre Lactame. Geeignete Aminocarbonsäuren bzw. deren Lactame sollten bis zu 12 C-Atomen, insbesondere 4 bis 8 C-Atome enthalten. Der für die praktische Verwendung bevorzugte Vertreter ist Epsilon-Caprolactam bzw. die sich daraus ableitende 7-Aminocapronsäure. Die Menge der zu verwendenden Lactame oder der entsprechenden Aminocarbonsäuren beträgt üblicherweise nicht mehr als 15 Gew.-%, beispielsweise 0,5 Gew.-% bis 5 Gew.-%, bezogen auf die Gesamtstiftmasse.

Als weitere Hilfsstoffe können die erfindungsgemäßen Klebestifte Pigmente, Farbstoffe, Duftstoffe, Konservierungsmittel und dergleichen enthalten. Die Mengen dieser Stoffe sind wie üblich untergeordnet. Weitere mögliche Additive sind beispielsweise weitere Füllstoffe, optische Aufheller, Dextrine, Cellulosederivate und nicht destrukturierte Stärkederivate. Ferner können Mannane, insbesondere Galactomannane in den erfindungsgemäßen Klebestiften enthalten sein. Geeignet sind insbesondere die Galactomannane aus den Früchten des Johannisbrotbaums und aus Guarmehl. Die destrukturierten Stärkeether können auch zu einem untergeordneten Anteil durch destrukturierte Mannane ersetzt werden.

In einem erfindungsgemäßen Klebestift sind bevorzugt
6 bis 49 Gew.-% eines makromolekularen Stoffes,
3 bis 20 Gew.-% Seife,
0 bis 30 Gew.-% Saccharose,
0 bis 25 Gew.-% weitere Hilfsstoffe,
0,2 bis 3 Gew.-% Superabsorber und
28 bis 90,8 Gew.-% Wasser enthalten; die Gesamtmenge der Inhaltsstoffe ergibt dabei 100 Gew.-%.

Ein weiterer Gegenstand der vorliegenden Erfindung ist ein Verfahren zur Herstellung eines erfindungsgemäßen Klebestiftes, das dadurch gekennzeichnet ist, dass die wässrige Zubereitung mindestens eines makromolekularen Stoffes mit der Seife oder den die Seife bildenden Bestandteilen, mindestens einem Superabsorber und gegebenenfalls den Füll- und/oder Hilfsstoffen vermischt wird, gegebenenfalls unter Erwärmen, bis eine gleichmäßige Mischung entstanden ist, und die Mischung ohne mechanische Beeinflussung stehengelassen und/oder abgekühlt wird. Es ist bevorzugt, die gleichmäßige Mischung nach Erwärmen auf Temperaturen von mindestens 50°C, vorzugsweise auf bis zu 80°C, direkt in Stifthülsen oder ähnliche Gebinde abzufüllen und ohne mechanische Beeinflussung zu den erwünschten Gelen erstarren zu lassen. Dieses Verfahren ist vorteilhaft, weil sich die Mischungen im erwähnten Temperaturbereich leicht gießen lassen. Die erfindungsgemäßen Klebestifte zeichnen sich durch gegenüber dem Stand der Technik nochmals optimierte Viskositäten bei Temperaturen um 80°C aus und können daher besonders gut verarbeitet werden.

Ein erfindungsgemäßer Klebestift weist eine hervorragende Druckfestigkeit auf. Gleichzeitig verfügt er über optimierte Abriebeigenschaften. Darunter ist zu verstehen, dass der Stift zum einen gleichmäßig aufträgt und zum anderen so viel Masse aufträgt, dass eine gute Verklebung der Substrate erreicht wird, aber kaum überschüssiger Klebstoff abgegeben wird, d. h. der Stift verliert kaum Klümpchen, die Bildung von lokalen Klebstoffüberschüssen und Unebenheiten auf der Substratoberfläche wird minimiert. Zusätzlich äußert sich der optimierte Abrieb in einer für den Benutzer angenehmeren Anwendung, der Stift gleitet besser über die zu verklebende Oberfläche. Die Klebeeigenschaften eines erfindungsgemäßen Klebestiftes sind ebenfalls hervorragend. Darüber hinaus ist die Lagerstabilität erhöht, die Verklebungen behalten auch bei längeren Lagerzeiten ihre weiße Farbe bei und vergilben nicht.

Ein weiterer Gegenstand der vorliegenden Erfindung ist die Verwendung von Superabsorbern als Hilfsstoff in Klebestiften.

Darüber hinaus umfasst die vorliegende Erfindung die Verwendung eines erfindungsgemäßen Klebestiftes oder eines nach einem erfindungsgemäßen Verfahren hergestellten Klebestiftes zum flächigen Verbinden, insbesondere zum Verkleben, von Substraten, insbesondere zum Verbinden von Papier, Pappe, Holz und/oder Kunststoff miteinander.

Im Folgenden wird die Erfindung anhand einiger Ausführungsbeispiele näher erläutert.

### Beispiele

### I Ausgangsmaterialien

Es wurden Hydroxypropylstärke sowie kommerziell erhältliche Fettsäuren (14-18 C-Atome) und Superabsorber verwendet.

### II Herstellung der Klebestifte

Die Komponenten gemäß jeweiliger Tabelle werden bei ca. 80 °C gemischt und gemäß der Beschreibung zu Klebestiften verarbeitet. Die jeweiligen Zusammensetzungen sind in Gewichtsteilen angegeben und in den Tabellen I und III aufgeführt.

### III 1. Eigenschaften der Klebestifte

### Verklebung und Probenvorbereitung

### Verklebt wurde Lyreco 80g Kopierpapier.

### Lagerung (Simulation der Langzeitlagerung verklebter Substrate)

3 Tage im Ofen bei 75°C; beurteilt wird, ob Vergilbung der Verklebung bzw. Auftrennung in die Bestandteile des Klebers erfolgt

### 2. Untersuchungen

### a) Druckfestigkeit

Unter dem Begriff Druckfestigkeit ist die beim Zusammenbrechen der Stiftform unter Druckbelastung parallel zur Längsachse gemessene Höchstlast zu verstehen.

Zur Messung der Druckfestigkeit dient das Prüfgerät Modell 464L, Messkopf 709, der Fa. Erichsen.

Der unmittelbar oberhalb des Kolbens abgeschnittene Klebstoff mit einer Mindestlänge von 30 mm wird zwischen zwei Haltestücke eingesteckt; hierbei handelt es sich um Scheiben aus Hart-PVC, deren Dicke ca. 10 mm beträgt und die eine an den jeweiligen Stiftdurchmesser angepasste kreisrunde Vertiefung von 3 mm aufweisen. Der mit den Haltestücken versehene Stift wird zentrisch auf den Prüftisch des Druckfestigkeitstesters gestellt. Die Höhe des Kraftmessinstrumentes über dem Prüftisch wird der Höhe des Prüfteils angepasst. Dann fährt man den Messkopf mit einer Vorschubgeschwindigkeit von ca. 70 mm pro Minute gegen den zu prüfenden Stift. Nach Erreichen der größten Druckkraft wird der Wert von der digitalen Anzeige abgelesen.

### b) Abbindezeit

Um zu prüfen, ob die Klebeeigenschaften der Stifte für den Verwendungszweck ausreichen, werden unter bestimmten Verarbeitungsbedingungen von Hand Probeklebungen durchgeführt und beurteilt. Hierbei wird wie folgt verfahren:

Ein Vorrat an weißem Lyreco-Kopierpapier DIN A4 (Flächengewicht ca. 80 g/m²) und zu prüfende Klebestifte werden mindestens 24 Stunden bei 20 °C und 65 % rel. Luftfeuchtigkeit klimatisiert. Das Prüfpapier wird in 5 cm breite und ca. 30 cm lange Streifen geschnitten. Über die ungestrichene Seite eines solchen Papierstreifens wird ein Klebestift, unter möglichst gleichmäßigem Druck, in Längsrichtung zweimal abgerieben, wobei ein gleichmäßiger Auftrag entstehen soll. Unmittelbar danach wird auf diesen Streifen ein zweiter, nicht mit Klebstoff versehener Papierstreifen mit gleicher Oberfläche nach innen aufgelegt und mit der Hand angerieben. Sodann wird versucht, die Papierstreifen langsam voneinander abzuschälen. Der Zeitpunkt, zu dem eine Trennung in der Klebzone nur noch unter Papierausriss auf voller Breite möglich ist, kennzeichnet die Abbindezeit.

### c) Offene Zeit

Die offene Zeit beschreibt den Zeitraum nach dem Klebstoffauftrag, innerhalb dessen ein Zusammenfügen der zu klebenden Materialien erfolgen muß, um nach der Abbindung noch einen vollständigen Papierausriss im Trennversuch zu erhalten. Die Methode entspricht der Prüfung der Abbindezeit, jedoch werden die Papierstreifen nach dem Klebstoffauftrag erst nach definierten Zeiten zusammengefügt. Beginnend mit 15 Sekunden kann die Abstufung beispielsweise jeweils weitere 15 Sekunden betragen. Bei langsam abbindenden Klebstoffen mit einer voraussehbaren längeren offenen Zeit wählt man entsprechend größere Abstände.

### d) Auftrag (Lumps)

Der so genannte Lumps-Test beschreibt den (unerwünschten) Abwurf von kleineren und größeren Brocken auf das Papier in Abweichung von einem durchgehenden Klebefilm. Es wird gravimetrisch (Auftragsmenge) und optisch getestet. Die Stifte werden dabei unter Belastung mit einem definierten Prüfgewicht in mehreren Bahnen über ein DIN A4-Blatt gefahren. Nach der optischen Beurteilung des Auftrags wird mit einer Analysenwaage die Auftragsmenge ermittelt.

### IV Ergebnisse

Die Ergebnisse sind in den Tabellen II und IV zusammengefasst.

**Tabelle I: Zusammensetzungen (Angaben in Gew.-%)**

| Zusammensetzung | Vergleich | Erfindungsgemäße Beispiele | | |
|---|---|---|---|---|
| | | **1** | **2** | **3** |
| Stärkeether (44%ige wässrige Zubereitung) | 53,0 | 53,0 | 53,0 | 53,0 |
| entmineralisiertes Wasser | 16,3 | 16,3 | 16,3 | 16,3 |
| Natronlauge (10%) | 1,4 | 1,4 | 1,4 | 1,4 |
| Fettsäuren | 5,6 | 5,6 | 5,6 | 5,6 |
| Saccharose | 20,0 | 20,1 | 21,9 | 21,4 |
| Celluloseether | | 1,9 | | |
| Superabsorber, feinkörnig (mittlerer Teilchendurchmesser 1-63 um) | | | 0,5 | 1,0 |
| Superabsorber, grobkörnig (mittlerer Teilchendurchmesser 220 um) | | 0,4 | | |
| Hilfsstoffe | 3,7 | 1,3 | 1,3 | 1,3 |
| | 100 | 100 | 100 | 100 |

**Tabelle II: Versuchsergebnisse mit den Stiften aus Tabelle I**

| Eigenschaft | Vergleich | Erfindungsgemäße Klebestifte | | |
|---|---|---|---|---|
| | | 1 | 2 | 3 |
| Beschaffenheit der Stiftmasse | fest und homogen | fest und homogen | fest und homogen | fest und homogen |
| Offene Zeit (einmaliger Auftrag) | 2min 24s | 1 min 25s | 1 min 24s | 1min 21s |
| Farbe der Verklebung nach Lagerung | beige | hellbeige | weiß | weiß |
| Druckfestigkeit (20g) | 90 N | 110 N | 113 N | 137 N |
| Auftrag (Lumps, gravimetrisch) bei vergleichbarer Klebeleistunq | 2,6g | 1,8g | 1,1g | 1,1g |

Die in Tabelle II dargestellten Ergebnisse zeigen, dass die Verwendung von Superabsorbern zur Verbesserung der Druckfestigkeit und des Auftragsverhaltens (Lumps) führt. Daneben wird die endgültige Verklebung schneller hergestellt, es verbleibt dennoch ausreichend Zeit zur Korrektur (offene Zeit). Ferner lassen sich die Verklebungen länger lagern, ohne zu vergilben.

**Tabelle III: Vergleich erfindungsgemäßer Klebestift - herkömmliche Klebestifte: Zusammensetzungen (Angaben in Gew.-%)**

| Zusammensetzung | Klebestift auf Basis von Stärkeethern | Kommerziell erhältlicher Klebestift der Fa. "UHU" | Klebestift auf Basis einer Polyacrylat-Dispersion | Klebestift auf Basis einer Polyacrylat-/PVP-Dispersion | Erfindungsgemäßer Klebestift |
|---|---|---|---|---|---|
| Stärkeether (44%ige wässrige Zubereitung) | 53,0 | | | | 53,0 |
| Glycerin (99%) | | | 7,0 | 7,0 | |
| Polyethylenglycol | | | 6,0 | 6,0 | |
| Polyacrylat (Neocryl BT 9) | | | 58,0 | 29,0 | |
| PVP (Luvitec K 90) | | | | 10,0 | |
| entmineralisiertes Wasser | 16,3 | | 21,0 | 42,7 | 16,5 |
| Natronlauge (10%) | 1,4 | | | | |
| Natronlauge (50%) | | | 4,0 | 1,3 | 0,5 |
| Fettsäuren | 5,6 | | 4,0 | 4,0 | 4,9 |
| Saccharose | 20,0 | | | | 18,4 |
| Superabsorber, feinkörnig (mittlerer Teilchendurchmess er 1-63 µm) | | | | | 0,5 |
| Hilfsstoffe | 3,7 | | | | 6,2 |
| | 100 | 100 | 100 | 100 | 100 |

Ferner wurden mit einem erfindungsgemäßen Klebestift Vergleichsmessungen gegenüber einem im Handel erhältlichen Stift und Klebestiften auf Basis von Stärkeethern, Polyacrylat und Polyacrylat/PVP durchgeführt, deren Ergebnisse in Tabelle IV dargestellt sind. Die Ergebnisse zeigen, dass ein erfindungsgemäßer Klebestift hervorragende Werte für Gebrauchseigenschaften wie Abrieb- bzw. Auftragverhalten, Druckfestigkeit und Klebkraft mit einer optimierten Viskosität im Herstellprozess verbindet. Insbesondere diese Kombination von Eigenschaften wird mit keinem der Vergleichsbeispiele erhalten.

**Tabelle IV: Vergleich erfindungsgemäßer Klebestift - herkömmliche Klebestifte: Ergebnisse**

| Eigenschaft | Klebestift auf Basis von Stärkeethern | Kommerziell erhältlicher Klebestift | Klebestift auf Basis einer Polyacrylat-Dispersion | Klebestift auf Basis einer Polyacrylat-/PVP-Dispersion | Erfindungs-gemäßer Klebestift |
|---|---|---|---|---|---|
| Viskosität (77°C) | 7500 mPas | 15000 mPas | 340 mPas | 610 mPas | 4560 mPas |
| Druckfestigkeit (20g) | 95 N | 70 N | 71 N | 84 N | 100 N |
| Auftrag (Lumps) | 2,54 g; kleine und mehrere große Brocken | 0,89 g; wenige kleine und mittlere Brocken | 2,55 g; viele kleine und mehrere große Brocken | 0,75 g; kleine und wenige große Brocken | 1,34 g; wenige kleine und mittlere Brocken |
| Offene Zeit | 3 min | 1 min 15 s | 45 s | Bestimmung nicht möglich | 1 min 30 s |
| Papierriss (einmaliger Auftraq) | Ja | Ja, aber nur zu 25% | Ja | Nein | Ja |
| Papierriss (zweimaliger Auftrag) | Ja | Ja | Ja | Nein | Ja |
| Papierriss (dreimaliger Auftrag) | Ja | Ja | Ja | Nein | Ja |

Keines der Vergleichsbeispiele weist die Kombination vorteilhafter Eigenschaften des erfindungsgemäßen Klebestiftes auf: Der Stift auf der Basis von Stärkeethern hat bei 77°C eine relativ hohe Viskosität, die das Einbringen in die Stifthülsen erschwert, zudem trägt er vergleichsweise stark und ungleichmäßig auf. Der kommerziell erhältliche Klebestift zeigt zwar ein gutes Auftragsverhalten, weist aber im Vergleich zum Stärkeether-Stift eine noch mal verdoppelte Viskosität bei 77°C auf; darüber hinaus zeigt er im Vergleich zum erfindungsgemäßem Stift eine schwächere Klebeleistung nach einmaligem Auftrag und eine um 30% geringere Druckfestigkeit. Der Stift auf Basis einer Polyacrylat-Dispersion trägt wiederum vergleichsweise stark und ungleichmäßig auf und hat eine niedrige Druckfestigkeit, zudem erschwert die niedrige Viskosität bei 77°C die Verarbeitung. Der Polyacrylat/PVP-Stift hat ebenfalls bei 77°C eine niedrige Viskosität, vor allem aber zeigt er eine im Vergleich zu allen anderen Stiften deutlich schwächere Klebeleistung. Der erfindungsgemäße Stift hingegen weist für alle Kriterien gute bis sehr gute Werte auf. Insbesondere bietet er einen gleichmäßigen Auftrag, hervorragende Druckfestigkeit und eine ausgewogene Viskosität bei 77°C.

## Patentansprüche

1. Klebestift, enthaltend eine wässrige Zubereitung mindestens eines makromolekularen Stoffes
und Seife, **dadurch gekennzeichnet, dass** der Klebestift mindestens einen Superabsorber
enthält, wobei es sich beim makromolekularen Stoff der wässrigen Zubereitung nicht um den Superabsorber handelt, sondern dieser als zusätzliche Komponenete zu der wässrigen Zubereitung des makromolekularen Stoffes zu verstehen ist.

2. Klebestift nach Anspruch 1, **dadurch gekennzeichnet, dass** der Superabsorber ein Polymer, erhältlich durch Polymerisation wenigstens eines ethylenisch ungesättigten Monomeren mit mindestens einer Säuregruppe, ist.

3. Klebestift nach Anspruch 1 oder 2, **dadurch gekennzeichnet, dass** der Superabsorber das Salz einer vernetzten Polyacrylsäure ist.

4. Klebestift nach einem der vorstehenden Ansprüche, **dadurch gekennzeichnet, dass** der Klebestift den Superabsorber in einer Menge von 0,2 bis 3 Gew.-%, bezogen auf die Gesamtmasse des Klebestiftes, enthält.

5. Klebestift nach einem der vorstehenden Ansprüche, **dadurch gekennzeichnet, dass** die wässrige Zubereitung mindestens eines makromolekularen Stoffes mindestens einen Stoff, ausgewählt aus viskositätsreduzierten Stärkeethern, Polyvinylpyrrolidon, Polyurethanen, Polyvinylalkoholen und/oder Gemischen davon, enthält.

6. Klebestift nach einem der vorstehenden Ansprüche, **dadurch gekennzeichnet, dass** die wässrige Zubereitung mindestens eines makromolekularen Stoffes mindestens einen nicht ionischen Stärkeether enthält, der durch Umsetzung von nativen Stärken mit Ethylenoxid, Propylenoxid, Butylenoxid und/oder Glycid erhältlich ist.

7. Klebestift nach einem der vorstehenden Ansprüche, **dadurch gekennzeichnet, dass** der Klebestift Saccharose enthält.

8. Klebestift nach Anspruch 7, **dadurch gekennzeichnet, dass** der Gehalt an Saccharose 15 bis 25 Gew.%, bezogen auf die Gesamtmasse des Klebestiftes, beträgt.

9. Klebestift nach einem der vorstehenden Ansprüche, **dadurch gekennzeichnet, dass** die Seife in Mengen von 3 bis 20 Gew.-%, bezogen auf die Gesamtmasse des Klebestiftes, enthalten ist.

10. Klebestift nach einem der vorstehenden Ansprüche, **dadurch gekennzeichnet, dass**
6 bis 49 Gew.-% eines makromolekularen Stoffes,
3 bis 20 Gew.-% Seife,
0 bis 30 Gew.-% Saccharose,
0 bis 25 Gew.-% weitere Hilfsstoffe,
0,2 bis 3 Gew.-% Superabsorber und
28 bis 90.8 Gew.% Wasser enthalten sind, wobei die Gesamtmenge der Inhaltsstoffe
100 Gew.-% ergibt.

11. Verfahren zur Herstellung eines Klebestiftes nach einem der vorstehenden Ansprüche, **dadurch gekennzeichnet, dass** die wässrige Zubereitung mindestens eines makromolekularen Stoffes mit der Seife oder den die Seife bildenden Bestandteilen, mindestens einem Superabsorber und gegebenenfalls den Füll- und/oder Hilfsstoffen vermischt wird, bis eine gleichmäßige Mischung entstanden ist, und die Mischung ohne mechanische Beeinflussung stehengelassen und/oder abgekühlt wird.

12. Verwendung von Superabsorbern als Hilfsstoff in Klebestiften.

13. Verwendung eines Klebestiftes nach einem der Ansprüche 1 bis 10 oder eines nach einem Verfahren nach Anspruch 11 hergestellten Klebestiftes zum flächigen Verbinden von Substraten, insbesondere zum Verbinden von Papier, Pappe, Holz und/oder Kunststoff miteinander.

## Claims

1. A glue stick containing an aqueous preparation of at least one macromolecular substance and soap, **characterized in that** the glue stick contains at least one superabsorber, wherein the macromolecular substance of the aqueous preparation is not the superabsorber, but the latter is instead to be understood as a component in addition to the aqueous preparation of the macromolecular substance.

2. The glue stick according to Claim 1, **characterized in that** the superabsorber is a polymer obtainable by polymerization of at least one ethylenically unsaturated monomer with at least one acid group.

3. The glue stick according to Claim 1 or 2, **characterized in that** the superabsorber is the salt of a crosslinked polyacrylic acid.

4. The glue stick according to one of the preceding claims, **characterized in that** the glue stick contains the superabsorber in a quantity from 0.2 to 3 wt%, based on the total mass of the glue stick.

5. The glue stick according to one of the preceding claims, **characterized in that** the aqueous preparation of at least one macromolecular substance contains at least one substance selected from viscosity-reducing starch ethers, polyvinylpyrrolidone, polyurethanes, polyvinyl alcohols, and/or mixtures thereof.

6. The glue stick according to one of the preceding claims, **characterized in that** the aqueous preparation of at least one macromolecular substance contains at least one nonionic starch ether that is obtainable by reacting natural starches with ethylene oxide, propylene oxide, butylene oxide, and/or glycidol.

7. The glue stick according to one of the preceding claims, **characterized in that** the glue stick contains sucrose.

8. The glue stick according to Claim 7, **characterized in that** the sucrose content is 15 to 25 wt% based on the total mass of the glue stick.

9. The glue stick according to one of the preceding claims, **characterized in that** the soap is contained in quantities from 3 to 20 wt% based on the total mass of the glue stick.

10. The glue stick according to one of the preceding claims, **characterized in that**
6 to 49 wt% of a macromolecular substance,
3 to 20 wt% soap,
0 to 30 wt% sucrose,
0 to 25 wt% further adjuvants,
0.2 to 3 wt% superabsorber, and
28 to 90.8 wt% water
are contained, wherein the total quantity of ingredients yields 100 wt%.

11. A method for manufacturing a glue stick according to one of the preceding claims, **characterized in that** the aqueous preparation of at least one macromolecular substance is mixed with the soap or the constituents forming the soap, with at least superabsorber, and optionally with the fillers and/or adjuvants until a homogeneous mixture has resulted, and the mixture is cooled and/or allowed to stand without mechanical influence.

12. Use of superabsorbers as an adjuvant in glue sticks.

13. Use of a glue stick according to one of Claims 1 to 10, or of a glue stick manufactured according to a method in accordance with Claim 11, for planar joining of substrates, in particular for joining paper, cardboard, wood, and/or plastic to one another.

## Revendications

1. Bâton de colle contenant une préparation aqueuse d'au moins une substance macromoléculaire et un savon, **caractérisé en ce que** le bâton de colle contient au moins un agent superabsorbant, dans lequel en ce qui concerne la substance macromoléculaire de la préparation aqueuse, il ne s'agit pas de l'agent superabsorbant, ce dernier devant être compris comme étant un composant supplémentaire par rapport à la préparation aqueuse de la substance macromoléculaire.

2. Bâton de colle selon la revendication 1, **caractérisé en ce que** l'agent superabsorbant est un polymère que l'on obtient par polymérisation d'au moins un monomère à insaturation éthylénique comprenant au moins un groupe acide.

3. Bâton de colle selon la revendication 1 ou 2, **caractérisé en ce que** l'agent superabsorbant est le sel d'un acide polyacrylique réticulé.

4. Bâton de colle selon l'une quelconque des revendications précédentes, **caractérisé en ce que** le bâton de colle contient l'agent superabsorbant en une quantité de 0,2 à 3 % en poids, rapportés à la masse totale du bâton de colle.

5. Bâton de colle selon l'une quelconque des revendications précédentes, **caractérisé en ce que** la préparation aqueuse d'au moins une substance macromoléculaire contient au moins une substance choisie parmi des éthers d'amidon à viscosité réduite, la polyvinylpyrolidone, des polyuréthanes, des alcools polyvinyliques et/ou leurs mélanges.

6. Bâton de colle selon l'une quelconque des revendications précédentes, **caractérisé en ce que** la préparation aqueuse d'au moins une substance macromoléculaire contient au moins un ester d'amidon non ionique, que l'on obtient par mise en réaction d'amidons naturels avec de l'oxyde d'éthylène, de l'oxyde de propylène, de l'oxyde de butylène et/ou du glycidol.

7. Bâton de colle selon l'une quelconque des revendications précédentes, **caractérisé en ce que** le bâton de colle contient du saccharose.

8. Bâton de colle selon la revendication 7, **caractérisé en ce que** la teneur en saccharose s'élève de 15 à 25 % en poids, rapportés à la masse totale du bâton de colle.

9. Bâton de colle selon l'une quelconque des revendications précédentes, **caractérisé en ce que** le savon est contenu dans des quantités de 3 à 20 % en poids, rapportés à la masse totale du bâton de colle.

10. Bâton de colle selon l'une quelconque des revendications précédentes, **caractérisé en ce qu'**il contient
de 6 à 49 % en poids d'une substance macromoléculaire;
de 3 à 20 % en poids de savon ;
de 0 à 30 % en poids de saccharose ;
de 0 à 25 % en poids d'autres adjuvants ;
de 0,2 à 3 % en poids d'un agent superabsorbant ; et
de 28 à 90,8 % en poids d'eau ;
la quantité totale des constituants s'élevant à 100 % en poids.

11. Procédé pour la production d'un bâton de colle selon l'une quelconque des revendications précédentes, **caractérisé en ce qu'**on mélange la préparation aqueuse d'au moins une substance macromoléculaire avec le savon ou avec les constituants formant le savon, au moins un agent superabsorbant et de manière facultative les substances de remplissage et/ou les substances auxiliaires, jusqu'à ce que l'on obtienne un mélange uniforme, et on laisse reposer et/ou on refroidit le mélange sans intervention mécanique.

12. Utilisation d'agents superabsorbants à titre d'adjuvant dans des bâtons de colle.

13. Utilisation d'un bâton de colle selon l'une quelconque des revendications 1 à 10 ou d'un bâton de colle fabriqué conformément à un procédé selon la revendication 11 pour la liaison surfacique de substrats, en particulier pour la liaison réciproque de papier, de carton, de bois et/ou d'une matière synthétique.
